# EUROPEAN PATENT APPLICATION

(11) **EP 2 439 983 A1**
(43) Date of publication of application: **11.04.2012**
(21) Application number: 10791449.1
(22) Date of filing: 08.06.2010
(51) Int. Cl.: H04W 48/00

(54) **METHOD, RADIO NETWORK CONTROL DEVICE AND USER DEVICE FOR IDENTIFYING MACRO CLOSED SUBSCRIBER GROUP CELL**

(30) Priority: 22.06.2009 CN 200910151205
(71) Applicant: Huawei Technologies Co., Ltd., Shenzhen, Guangdong 518129 (CN)
(72) Inventor: XIE, Boyun, Shenzhen Guangdong 518129 (CN); CHAI, Li, Shenzhen Guangdong 518129 (CN); ZHAO, Jinjing, Shenzhen Guangdong 518129 (CN); MICHAEL, Roberts, Shenzhen Guangdong 518129 (CN); ZHOU, Zheng, Shenzhen Guangdong 518129 (CN); YANG, Xudong, Shenzhen Guangdong 518129 (CN)
(74) Representative: Körber, Martin Hans
(86) International application number: PCT/CN2010/073650
(87) International publication number: WO 2010/148943

(57) **Abstract**

The present invention relates to a method, a radio network control device, and a user equipment (UE) for recognizing a macro closed subscriber group (CSG) cell. The method includes: setting neighbor cell information including indication information for identifying a macro CSG cell; and sending the neighbor cell information. By sending neighbor cell information including indication information for identifying a macro CSG cell, the method enables the UE to judge which cells in a neighbor cell are macro CSG cells according to the indication information in received neighbor cell information, so the purpose that the UE recognizes a macro CSG cell is achieved.

## Description

This application claims priority to Chinese Patent Application No. 200910151205, filed with the Chinese Patent Office on June 22, 2009 and entitled "METHOD, RADIO NETWORK CONTROL DEVICE, AND USER EQUIPMENT FOR RECOGNIZING MACRO CLOSED SUBSCRIBER GROUP CELL", which is incorporated herein by reference in its entirety.

### FIELD OF THE INVENTION

The present invention relates to the field of radio communications technologies, and in particular, to a method, a radio network control device, and a user equipment (UE) for recognizing a macro closed subscriber group (CSG) cell.

### BACKGROUND OF THE INVENTION

With the development of the third generation (3G) technologies and the continuous expansion of the users, there is a need for providing a high-rate data service at low cost in a home environment. As a new 3G product, a home Node B (HNB) receives extensive attention and study due to its capability of meeting the need.

Feasibility studies of the HNB in respect of architecture, mobility, access control, and radio frequency are each carried out. Because the HNB is geared toward a home, a company, and other small-sized application scenarios, an HNB device is likely to be owned by a user. Therefore, the HNB is required to be able to decide whether to provide a service based on an identity of the user, that is, to have an access control function.

In response to the requirement, a CSG for access control is introduced, that is, one HNB or several HNBs together are set to be a single CSG that is represented by one CSG identity (CSG ID), and only a subscriber may get access to a service of the CSG A CSG may have more than one subscriber and a user may also subscribe to more than one CSG A UE itself maintains an allowed CSG list (ACL). The list stores CSG IDs of CSG cells, and the CSG cells corresponding to the CSG IDs not included in this list are not accessible to the UE.

Because the coverage of an HNB is generally small, a macro CSG cell is introduced on the basis of a conventional CSG cell, in order to meet the requirement of a large company for big coverage. A macro CSG cell allows a company to deploy its own radio office environment; a subscriber may also obtain a special service through a macro CSG cell; and an operator may provide a special service to a company by leasing some macro base stations in order to decrease cost and significantly reduce the number of deployed HNBs.

When implementing the present invention, the inventor discovers that the prior art has at least the following defect: Currently, a technical solution is needed to enable a CSG UE to recognize a macro CSG cell.

### SUMMARY OF THE INVENTION

Embodiments of the present invention provide a method, a radio network control device, and a UE for recognizing a macro CSG cell, so that the UE may recognize a macro CSG cell.

An embodiment of the present invention provides a method for recognizing a macro CSG cell, where the method includes:
receiving neighbor cell information including indication information for identifying a macro CSG cell; and
recognizing the macro CSG cell in a neighbor cell according to the indication information.

An embodiment of the present invention also provides a method for recognizing a macro CSG cell, where the method includes:
setting neighbor cell information including indication information for identifying a macro CSG cell; and
sending the neighbor cell information;
where, the indication information includes any one of the following:
a macro CSG cell scrambling code, where the macro CSG cell scrambling code is a scrambling code within a scope of scrambling codes reserved for macro CSG cells;
scrambling code information and a macro CSG cell identity (cell ID);
scrambling code information, and bit information indicating a macro cell as a macro CSG cell; and
scrambling code information in a blacklist and a indicator of a macro cell as a macro CSG cell;
the scrambling code information is used for identifying a scrambling code used by a macro CSG cell or a macro cell, and the blacklist includes a list of scrambling code information.

An embodiment of the present invention also provides a radio network control device, including:
a receiving module, configured to receive neighbor cell information including indication information for identifying a macro CSG cell; and
a recognizing module, configured to recognize the macro CSG cell in a neighbor cell according to the indication information.

An embodiment of the present invention also provides a UE, including:
a setting module, configured to set neighbor cell information including indication information for identifying a macro CSG cell; and
a sending module, configured to send the neighbor cell information;
where, the setting module specifically includes one or any combination of the following submodules:
   a first setting submodule, configured to generate indication information including a macro CSG cell scrambling code, where the macro CSG cell scrambling code is a scrambling code within the scope of scrambling codes reserved for macro CSG cells;
   a second setting submodule, configured to generate indication information including scrambling code information and a macro CSG cell ID;
   a third setting submodule, configured to generate indication information including scrambling code information and bit information indicating a macro cell as a macro CSG cell; and
   a fourth setting submodule, configured to generate indication information including scrambling code information in a blacklist and a indicator of a macro cell as a macro CSG cell;
the scrambling code information is used for identifying a scrambling code used by a macro CSG cell or a macro cell, and the blacklist includes a list of scrambling code information.

In the embodiments, neighbor cell information including indication information for identifying a macro CSG cell is sent, so that a UE may judge which cells in a neighbor cell are macro CSG cells according to the indication information in received neighbor cell information, and therefore the purpose that the UE recognizes a macro CSG cell is achieved.

The technical solution of the present invention is hereinafter described in detail with reference to the accompanying drawings and embodiments.

### BRIEF DESCRIPTION OF THE DRAWINGS

FIG. 1 is a flowchart of a method for recognizing a macro CSG cell according to an embodiment of the present invention;
FIG. 2 is a flowchart of another method for recognizing a macro CSG cell according to an embodiment of the present invention;
FIG. 3 is a flowchart of still another method for recognizing a macro CSG cell according to an embodiment of the present invention;
FIG. 4 is a flowchart of still another method for recognizing a macro CSG cell according to an embodiment of the present invention;
FIG. 5 is a schematic diagram of a structure of a radio network control device according to an embodiment of the present invention; and
FIG. 6 is a schematic diagram of a structure of a UE according to an embodiment of the present invention.

### DETAILED DESCRIPTION OF THE EMBODIMENTS

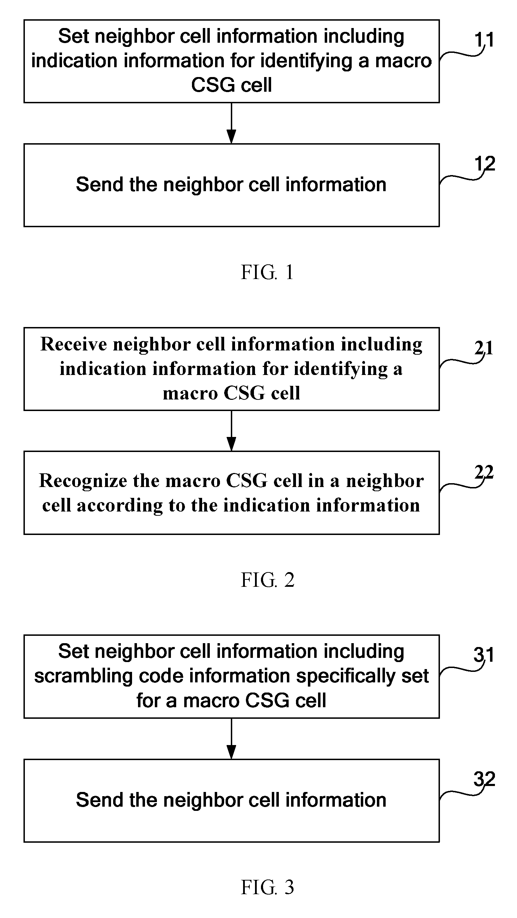

FIG. 1 is a flowchart of a method for recognizing a macro CSG cell according to an embodiment of the present invention. The method includes the following steps:
Step 11: Set neighbor cell information including indication information for identifying a macro CSG cell.

This action may be executed by a radio network control device such as a radio network controller (RNC) or an evolved NodeB ( e Node B). The radio network control device sets the indication information of the macro CSG cell in the neighbor cell information, for identifying the macro CSG cell. The indication information for identifying the macro CSG cell may be: a macro CSG cell scrambling code which is a scrambling code within a scope of scrambling codes reserved for macro CSG cells, that is, the scrambling code is a scrambling code reserved for a macro CSG cell; or the indication information may be: scrambling code information and a macro CSG cell ID (namely, a CSG ID), where the scrambling code information is used for identifying a scrambling code used by a macro CSG cell or a macro cell and may be a indicator for identifying a scrambling code sequence, such as a sequence number of a scrambling code; or the indication information may be: scrambling code information and bit information that indicates a macro cell as a macro CSG cell; or the indication information may also be: scrambling code information in a blacklist and a indicator of a macro cell as a macro CSG cell. Within the scope of a neighbor cell, scrambling code information, such as a primary scrambling code or physical cell identity (PSC/PCI), may uniquely identify each cell. That is, simply by using the scrambling code information, the UE may distinguish which cell in the neighbor cell a corresponding cell is. For example, the indication information may be scrambling code information and a CSG ID corresponding to the scrambling code information; or a bit indication may be added to corresponding information of a macro CSG cell, where the bit indication is used for identifying the cell as a macro CSG cell; or a segment of a PCI, namely, a macro CSG cell scrambling code, may be specifically reserved for a macro CSG cell; or the indication information may be a indicator for identifying a cell corresponding to the scrambling code information in a blacklist as a macro CSG cell.

Step 12: Send the neighbor cell information, so that the UE may recognize the macro CSG cell in a neighbor cell according to the indication information.

This action may be executed by a radio network control device. The radio network control device may send the neighbor cell information to the UE by a broadcast message or special signaling. Thus, the UE may recognize the macro CSG cell in the neighbor cell according to the scrambling code information and the indication information.

In this embodiment, the radio network control device sends including indication information for identifying a macro CSG cell, so that the UE may recognize which cells in the neighbor cells are macro CSG cells according to the indication information, which meets the current need for recognizing a macro CSG cell.

Accordingly, FIG. 2 is a flowchart of another method for recognizing a macro CSG cell according to an embodiment of the present invention. The method includes the following steps:
Step 21: Receive neighbor cell information including indication information for identifying a macro CSG cell. Details about the indication information are referred to the description of step 11.

This action may be executed by a UE. The UE may obtain the neighbor cell information from a broadcast message sent from a radio network control device or special signaling sent from a radio network control device. For example, the special signaling may be an RRC connection release message sent by the radio network control device, where the neighbor cell information is added in the RRC Connection Release message, and the RRC Connection Release message includes information about a macro CSG cell. The UE obtains the neighbor cell information by receiving the RRC Connection Release message. However, the special signaling is not limited to the RRC Connection Release message.

Step 22: Recognize the macro CSG cell in a neighbor cell according to the indication information.

This action may be executed by a UE.

When the indication information is a CSG ID, the UE may know, by the CSG ID, that a corresponding cell is a macro CSG cell. It is assumed that the UE currently camps on a general macro cell. The UE receives system broadcast information broadcasted by the macro cell on which the UE currently camps. For a cell that is a macro CSG cell in the neighbor cell, namely, a macro CSG neighbor cell, the neighbor cell information includes not only the scrambling code information of the neighbor cell, but also the CSG ID of the neighbor cell. A macro network may also notify the UE of the information of the macro CSG neighbor cell by means of special signaling. After obtaining the CSG ID of the macro CSG neighbor cell, the UE determines that the corresponding cell is a macro CSG cell according to the macro CSG ID. Further, the UE matches the CSG ID with an ACL stored by the UE. If the obtained CSG ID is in the ACL of the UE, the UE may trigger measurement of the cell, and reselect the macro CSG cell according to certain criteria. If the obtained CSG ID is not in the ACL of the UE, the UE may ignore this macro CSG cell when measuring and reselecting a neighbor cell. When the UE is a non-CSG UE, the UE directly ignores this cell.

When the information corresponding to the macro CSG cell in the neighbor cell information is placed into a blacklist and the indication information is used for identifying a corresponding cell in the blacklist as a macro CSG cell, the UE determines whether the corresponding cell is a macro CSG cell according to the indication information. It is assumed that a broadcast message sent by a macro cell on which the UE currently camps includes a blacklist in which the information of the macro CSG neighbor cell is listed. The blacklist may be may be sent by special signaling, and at this time, the blacklist may be specific to the UE. A UE subscribing to a macro CSG cell may recognize the macro CSG cell in the neighbor cell after receiving the blacklist. Further, the UE measures a macro CSG cell around the UE according to the content of the blacklist. The UE may also, by previously stored memories, namely, fingerprint information, such as frequency, scrambling code, location information, and radio environment of a measured macro CSG cell, trigger the macro CSG cell around the UE to perform automatic search, namely, measurement. The UE may also automatically measure a macro CSG cell at the highest-priority frequency layer according to a special frequency priority sent by a network side. If the measured macro CSG cell ranks best according to cell reselection criteria, the UE reads a broadcast message of the macro CSG cell to obtain the CSG ID of the macro CSG cell. Further, if the obtained CSG ID is in the ACL stored by the UE, the UE reselects the macro CSG cell, and if the obtained CSG ID is not in the ACL, the UE does not reselect the cell. A non-CSG UE ignores the macro CSG cell when performing measurement and reselection, that is, the macro CSG cell is not a candidate for the measurement and reselection performed by the non-CSG UE.

When the indication information is used for, by adding bit information in corresponding neighbor cell, indicating whether a neighbor cell is a macro CSG cell, the UE judges whether the corresponding neighbor cell is a macro CSG cell according to a value of the bit information. Assume that in a broadcast message of the macro cell on which the UE currently camps, bit information is added for a macro CSG neighbor cell, that is, bit information is added in the scrambling code information of the macro CSG neighbor cell to indicate the neighbor cell as a macro CSG cell. A CSG UE knows the corresponding neighbor cell is a macro CSG cell according to the added bit information. Further, the CSG UE may measure the macro CSG cell. If the cell ranks best according to the cell reselection criteria, the CSG UE reads a broadcast message of the cell to obtain the CSG ID of the cell. Further, if the obtained CSG ID is in the ACL of the CSG UE, the CSG UE reselects the macro CSG cell; and if the obtained CSG ID is not in the ACL of the CSG UE, the CSG UE does not reselect the macro CSG cell. If a non-CSG UE receives information of a macro CSG neighbor cell, the non-CSG UE ignores the cell and does not measure and reselect the cell.

In this embodiment, the UE receives including indication information for identifying a macro CSG cell, so that the UE may recognize which cells in the neighbor cells are macro CSG cells according to the indication information, which meets the current need for recognizing a macro CSG cell.

FIG. 3 is a flowchart of still another method for recognizing a macro CSG cell according to an embodiment of the present invention. The method includes the following steps:
Step 31: Set neighbor cell information including scrambling code information specifically set for a macro CSG cell.

This action may be executed by a radio network control device, such as an RNC or an eNB. Macro CSG scrambling code reservation information may be notified to the UE by a broadcast message or special signaling, and the UE receives and stores corresponding scrambling code reservation information and judges whether a cell is a macro CSG cell according to the information. A part of scrambling codes 0-511 may be reserved for a macro CSG cell, for example, scrambling codes 173-321 are set to be used specifically by a macro CSG cell, and the UE may know whether a corresponding cell is a macro CSG cell by judging the scrambling code information. If the scrambling code information in the neighbor cell information received by the UE is 67, 236, and 311, the UE recognizes a cell corresponding to the scrambling code information according to a preset scope of a scrambling code specifically used for a macro CSG cell. For example, scrambling code 67 is smaller than scrambling code 173, so the UE determines that the cell corresponding to the scrambling code information is not a macro CSG cell, and scrambling code 236 and scrambling code 311 are in the scope of scrambling codes 173-321, so the UE determines that the cells corresponding to the two scrambling codes are both macro CGS cells. Here, the macro CSG scrambling code reservation scope does not intersect with a closed CSG scrambling code reservation scope, a hybrid home cell scrambling code reservation scope, and other scrambling code reservation scopes.

Step 32: Send the neighbor cell information, so that the UE may recognize the macro CSG cell in a neighbor cell according to the scrambling code information.

This action may be executed by a radio network control device, such as an RNC or an eNB. The radio network control device may send the neighbor cell information to the UE by a broadcast message or special signaling, as described in detail in step 12. The UE may recognize which cells in the neighbor cells are macro CSG cells according to the scrambling code information in the neighbor cell information, as described in detail in step 11.

In this embodiment, the radio network control device sends scrambling code information reserved for a macro CSG cell, so that the UE may recognize which cells in the neighbor cells are macro CSG cells, which meets the current need for recognizing a macro CSG cell.

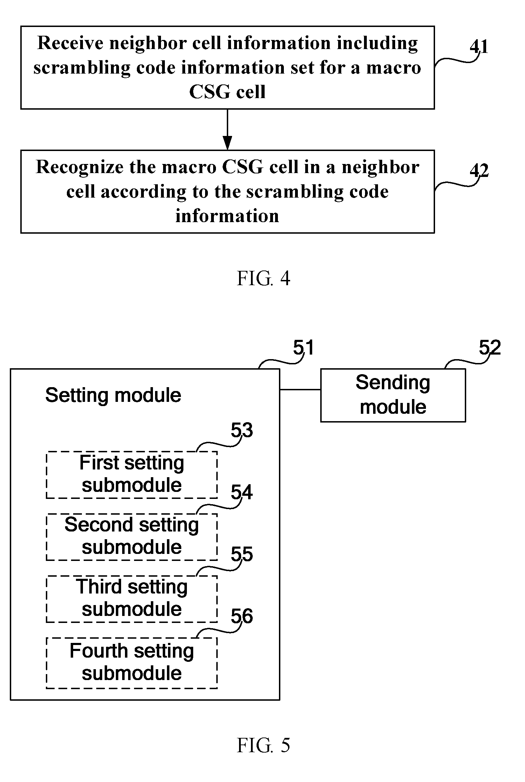

Accordingly, FIG. 4 is a flowchart of still another method for recognizing a macro CSG cell according to an embodiment of the present invention. The method includes the following steps:
Step 41: Receive neighbor cell information including scrambling code information set for a macro CSG cell. Details about the scrambling code information are referred to the description of step 31.

This action may be executed by a UE. The UE receives the neighbor cell information sent by a radio network control device such as an RNC or an eNB through a broadcast message or special signaling to obtain the scrambling code information of each neighbor cell.

Step 42: Recognize the macro CSG cell in a neighbor cell according to the scrambling code information.

This action may be executed by a UE. The UE receives the broadcast message or special signaling of the radio network control device to obtain the scrambling code information, and judges whether a cell corresponding to the scrambling code information is a macro CSG cell according to information about scrambling codes reserved for macro CSG cells, such as a scope of scrambling codes for macro CSG cells. When recognizing a macro CSG cell, the UE may further measure the signal quality of the recognized macro CSG cell. Details about the method for triggering measurement are referred to the description of step 22. If the measured macro CSG cell meets the cell reselection criteria, the UE reads a system broadcast message of the measured macro CSG cell to obtain the CSG ID of the macro CSG cell. Subsequently, the UE matches the obtained CSG ID with the ACL. If the CSG ID is in the ACL of the UE, the UE reselects the cell.

After a non-CSG UE receives the neighbor cell information, the non-CSG UE may also recognize whether a corresponding cell is a macro CSG cell according to the scrambling code. The non-CSG UE does not regard a macro CSG cell as a candidate for measurement and reselection.

In this embodiment, the UE recognizes which cells in the neighbor cell are macro CSG cells according to the scrambling codes reserved for macro CSG cells, which meets the current need for recognizing a macro CSG cell.

FIG. 5 is a schematic diagram of a structure of a radio network control device according to an embodiment of the present invention. The device may be an RNC or an eNB, including a setting module 51 and a sending module 52. The setting module 51 is configured to set neighbor cell information including indication information for identifying a macro CSG cell. Details about the indication information are referred to the description of step 11 of the method embodiment as described above. The sending module 52 is configured to send the neighbor cell information, so that the UE may recognize the macro CSG cell in a neighbor cell according to the indication information. The sending module 52 is specifically configured to send the neighbor cell information by a broadcast message or specifically configured to send the neighbor cell information by special signaling.

The setting module 51 may specifically include one or any combination of following submodules: a first setting submodule 53, a second setting submodule 54, a third setting submodule 55, and a fourth setting submodule 56. The first setting submodule 53 is configured to generate indication information including a macro CSG cell scrambling code, where the macro CSG cell scrambling code is a scrambling code within the scope of scrambling codes reserved for macro CSG cells. The second setting submodule 54 is configured to generate indication information including scrambling code information and a CSG ID. The third setting submodule 55 is configured to generate indication information including scrambling code information and bit information indicating a macro cell as a macro CSG cell. The fourth setting submodule 56 is configured to generate indication information including scrambling code information in a blacklist and a indicator of a macro cell as a macro CSG cell.

The device described in this embodiment may be used for completing the method described in the embodiment corresponding to any one of FIG. 1 to FIG. 4.

In this embodiment, the radio network control device sends including indication information for identifying a macro CSG cell, so that the UE may recognize which cells in the neighbor cell are macro CSG cells according to the indication information, which meets the current need for recognizing a macro CSG cell.

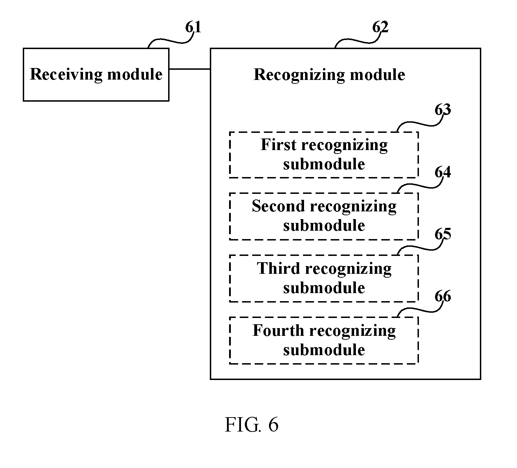

FIG. 6 is a schematic diagram of a structure of a UE according to an embodiment of the present invention. The UE includes a receiving module 61 and a recognizing module 62. The receiving module 61 is configured to receive neighbor cell information including indication information for identifying a macro CSG cell. Details about the indication information are referred to the description of step 11 of the method embodiment as described above. The recognizing module 62 is configured to recognize the macro CSG cell in a neighbor cell according to the indication information. When the indication information is a macro CSG ID, the recognizing module 62 is specifically configured to determine a corresponding cell to be a macro CSG cell according to the CSG ID.

The recognizing module 62 may include one or any combination of the following submodules: a first recognizing submodule 63, a second recognizing submodule 64, a third recognizing submodule 65, and a fourth recognizing submodule 66. When the indication information is scrambling code information and a CSG ID, the first recognizing submodule 63 is configured to determine the corresponding cell to be a macro CSG cell according to the CSG ID. When the indication information is scrambling code information in a blacklist and a indicator of a macro cell as a macro CSG cell and if a received cell scrambling code is in the blacklist, the second recognizing submodule 64 is configured to determine the cell corresponding to the scrambling code in the blacklist to be a macro CSG cell. When the indication information is scrambling code information and bit information indicating a macro cell as a macro CSG cell, the third recognizing submodule 65 is configured to determine the corresponding cell to be a macro CSG cell according to the bit information. When the indication information is a macro CSG cell scrambling code, where the macro CSG cell scrambling code is a scrambling code within the scope of scrambling codes reserved for macro CSG cells, the fourth recognizing submodule 66 is configured to determine the corresponding cell to be a macro CSG cell according to the macro CSG cell scrambling code.

The UE provided by the embodiment of the present invention may also include a measuring module and an obtaining module. The measuring module is configured to measure a cell that is determined to be a macro CSG cell, and the obtaining module is configured to read, according to a measurement result, a broadcast message of a cell that meets a requirement for cell reselection in a list to obtain a corresponding macro CSG ID.

The UE provided by the embodiment of the present invention may also include a reselecting module. When the obtained CSG ID corresponds to a stored ACL, the reselecting module is configured to reselect a macro CSG cell corresponding to the macro CSG ID according to a measurement rule.

The UE provided by the embodiment of the present invention may also include a storing module. The storing module is configured to store the ACL.

The device described in this embodiment may be used for completing the method described in the embodiment corresponding to any one of FIG. 1 to FIG. 4.

In this embodiment, the UE receives including indication information for identifying a macro CSG cell, so that the UE may recognize which cells in the neighbor cell are macro CSG cells according to the indication information, which meets the current need for recognizing a macro CSG cell, and which helps the UE to implement corresponding procedures, such as measurement, reselection, and handover. Further, after recognizing the macro CSG cell, the UE judges, according to the ACL, whether the macro CSG cell is a macro CSG cell that is subscribed to by the UE, which implementing the reselection of a subscribed macro CSG cell.

Persons skilled in the art may understand that all or part of the steps in the above method embodiments may be implemented by relevant hardware instructed by a program. The program may be stored in a computer readable storage medium, and when the program runs, the steps of the above method embodiments are executed. The storage medium may be any medium for storing program codes, such as a read only memory (ROM), a random access memory (RAM), a magnetic disk, and a compact disk-read only memory (CD-ROM).

Finally, it should be noted that the above embodiments are only used to describe the technical solution of the present invention instead of limiting the technical solution. Although the present invention is described in detail with reference to the foregoing embodiments, those skilled in the art should understand that they may still make modifications to the technical solution described in the foregoing embodiments or make equivalent substitutions to some technical features thereof, without departing from the spirit and protection scope of the technical solution of the embodiments of the present invention.

## Claims

1. A method for recognizing a macro closed subscriber group cell, comprising:
receiving neighbor cell information that comprises indication information for identifying a macro closed subscriber group cell; and
recognizing the macro closed subscriber group cell in a neighbor cell according to the indication information.

2. The method for recognizing a macro closed subscriber group cell according to claim 1, wherein:
the indication information is scrambling code information and a macro closed subscriber group cell identity; and
the recognizing the macro closed subscriber group cell in a neighbor cell according to the indication information comprises determining a cell corresponding to the scrambling code information to be a macro closed subscriber group cell according to the macro closed subscriber group cell identity.

3. The method for recognizing a macro closed subscriber group cell according to claim 1, wherein:
the indication information is scrambling code information in a blacklist and a indicator of a macro cell as a macro closed subscriber group cell,
the recognizing the macro closed subscriber group cell in a neighbor cell according to the indication information comprises: when received scrambling code information is in the blacklist, determining a cell corresponding to the scrambling code information in the blacklist to be a macro closed subscriber group cell according to the indicator of a macro cell as a macro closed subscriber group cell; or
the indication information is scrambling code information and bit information that indicates a macro cell as a macro closed subscriber group cell,
the recognizing the macro closed subscriber group cell in a neighbor cell according to the indication information comprises determining a cell corresponding to the scrambling code information to be a macro closed subscriber group cell according to the bit information; or
the indication information is a macro closed subscriber group cell scrambling code, wherein the macro closed subscriber group cell scrambling code is a scrambling code within a scope of scrambling codes reserved for macro closed subscriber group cells,
the recognizing the macro closed subscriber group cell in neighbor cells according to the indication information comprises determining a corresponding cell to be a macro closed subscriber group cell according to the macro closed subscriber group cell scrambling code.

4. The method for recognizing a macro closed subscriber group cell according to anyone of claim 3, further comprising:
measuring the cell that is determined to be a macro closed subscriber group cell; and
according to a measurement result, reading a broadcast message of a cell that meets a requirement for cell reselection to obtain a corresponding macro closed subscriber group cell identity in the broadcast message.

5. The method for recognizing a macro closed subscriber group cell according to claim 2, further comprising:
if a stored list of a subscribed macro closed subscriber group cell comprises the macro closed subscriber group cell identity, measuring a macro closed subscriber group cell corresponding to the macro closed subscriber group cell identity, and reselecting the macro closed subscriber group cell according to a measurement rule.

6. The method for recognizing a macro closed subscriber group cell according to claim 4, further comprising: if the obtained macro closed subscriber group cell identity corresponds to a stored list of a subscribed macro closed subscriber group cell, reselecting a macro closed subscriber group cell corresponding to the macro closed subscriber group cell identity according to the measurement rule.

7. A method for recognizing a macro closed subscriber group cell, comprising:
setting neighbor cell information that comprises indication information for identifying a macro closed subscriber group cell; and
sending the neighbor cell information;
wherein the indication information comprises any one of the following:
a macro closed subscriber group cell scrambling code, wherein the macro closed subscriber group cell scrambling code is a scrambling code within a scope of scrambling codes reserved for macro closed subscriber group cells;
scrambling code information and a macro closed subscriber group cell identity;
scrambling code information and bit information that indicates a macro cell as a macro closed subscriber group cell; and
scrambling code information in a blacklist and a indicator of a macro cell as a macro closed subscriber group cell;
the scrambling code information is used for identifying a scrambling code used by a macro closed subscriber group cell or a macro cell, and the blacklist comprises a list of scrambling code information.

8. A user equipment, comprising:
a receiving module, configured to receive neighbor cell information that comprises indication information for identifying a macro closed subscriber group closed subscriber group cell; and
a recognizing module, configured to recognize a macro closed subscriber group cell in a neighbor cell according to the indication information.

9. The user equipment according to claim 8, wherein the recognizing module comprises one or any combination of following submodules:
a first recognizing submodule, configured to determine, when the indication information is scrambling code information and a macro closed subscriber group cell identity, a cell corresponding to the scrambling code information to be a macro closed subscriber group cell according to the macro closed subscriber group cell identity;
a second recognizing submodule, configured to determine, when the indication information is scrambling code information in a blacklist and a indicator of a macro cell as a macro closed subscriber group cell and if received scrambling code information is in the blacklist, a cell corresponding to the scrambling code information in the blacklist to be a macro closed subscriber group cell according to the indicator of a macro cell as a macro closed subscriber group cell;
a third recognizing submodule, configured to determine, when the indication information is scrambling code information and bit information that indicates a macro cell as a macro closed subscriber group cell, a cell corresponding to the scrambling code information to be a macro closed subscriber group cell according to the bit information; and
a fourth recognizing submodule, configured to determine, when the indication information is macro closed subscriber group scrambling code information, wherein the macro closed subscriber group scrambling code information is a scrambling code within a scope of scrambling codes reserved for macro closed subscriber group cells, a corresponding cell to be a macro closed subscriber group cell according to the macro closed subscriber group scrambling code information.

10. The user equipment according to claim 9, further comprising:
a measuring module, configured to measure the cell that is determined to be a macro closed subscriber group cell; and
an obtaining module, configured to read, according to a measurement result, a broadcast message of a cell that meets a requirement for cell reselection in a list, so as to obtain a corresponding macro closed subscriber group cell identity.

11. The user equipment according to any one of claims 8 to 10, further comprising:
a storing module, configured to store a list of a subscribed macro closed subscriber group cell; and
a reselecting module, configured to reselect a macro closed subscriber group cell corresponding to the macro closed subscriber group cell identity according to a measurement rule if the obtained macro closed subscriber group cell identity corresponds to the list of the subscribed macro closed subscriber group cell stored by the storing module.

12. A radio network control device, comprising:
a setting module, configured to set neighbor cell information that comprises indication information for identifying a macro closed subscriber group cell; and
a sending module, configured to send the neighbor cell information;
wherein, the setting module specifically comprises one or any combination of following submodules:
a first setting submodule, configured to generate indication information that comprises a macro closed subscriber group cell scrambling code, wherein the macro closed subscriber group cell scrambling code is a scrambling code within a scope of scrambling codes reserved for macro closed subscriber group cells;
a second setting submodule, configured to generate indication information that comprises scrambling code information and a macro closed subscriber group cell identity;
a third setting submodule, configured to generate indication information that comprises scrambling code information and bit information that indicates a macro cell as a macro closed subscriber group cell; and
a fourth setting submodule, configured to generate indication information comprises scrambling code information in a blacklist and a indicator of a macro cell as a macro closed subscriber group cell;
the scrambling code information is used for identifying a scrambling code used by a macro closed subscriber group cell or a macro cell, and the blacklist comprises a list of scrambling code information.
